# EUROPÄISCHE PATENTANMELDUNG

(11) **EP 1 022 202 A1**
(43) Veröffentlichungstag der Anmeldung: **26.07.2000**
(21) Anmeldenummer: 99125707.2
(22) Anmeldetag: 23.12.1999
(51) Int. Cl.: B60S 1/38

(54) **Wischerblatt**

(30) Priorität: 19.01.1999 DE 19901818
(71) Anmelder: Volkswagen Aktiengesellschaft, 38436 Wolfsburg (DE)
(72) Erfinder: Ostrowski, Wolfgang, 38446 Wolfsburg (DE)

(57) **Zusammenfassung**

Die Erfindung betrifft ein Wischerblatt zum Reinigen von Kraftfahrzeugscheiben, das über mehrere Krallenbügel (5) aus Metall von einem Wischerarm gehalten wird, wobei das Wischerblatt eine Federschiene (1) aus Metall mit einer Ummantelung (2) aus Gummi umfaßt und die Ummantelung (2) in eine Wischlippe (3) übergeht.

Um dem Wischerblatt die höchstmögliche Beweglichkeit zu geben, ohne daß die mindestens erforderliche Steifigkeit verlorengeht, wird vorgeschlagen, daß die Ummantelung (2) der Federschiene (1) in Höhe jedes der mehreren Krallenbügel (5) entlang der Federschiene (1) über eine Länge unterbrochen ist, die einer Breite des Krallenbügels (5) entspricht, so daß die Federschiene (1) freiliegt und direkt von dem Krallenbügel (5) gehalten wird.

## Beschreibung

Die Erfindung betrifft ein Wischerblatt zum Reinigen von Kraftfahrzeugscheiben, das über mehrere Krallenbügel aus Metall von einem Wischerarm gehalten wird, wobei das Wischerblatt eine Federschiene aus Metall mit einer Ummantelung aus Gummi umfaßt und die Ummantelung in eine Wischlippe übergeht.

Wichtigstes Element der Wischeranlage ist der Wischgummi. Belastet über die Krallen der Bügelsystems und gestützt durch Federschienen, berührt die Mikro-Doppelkante der Wischlippe mit einer Breite von 0,01 bis 0,015 mm die Scheibe. Die Lippe muß im gesamten Wischfeld unter etwa 45° über die Scheibe gezogen werden, unabhängig davon, daß die Trockenreibwerte zwischen 0,8 und 2,5 bzw. die Naßreibwerte zwischen 0,6 bis 0,1 in Abhängigkeit von Luftfeuchtigkeit und Reibgeschwindigkeit schwanken. Der Andrückwinkel der Wischerlippe wird durch die Wahl des Profils und der technischen Eigenschaften des Gummis gewährleistet.

Ein solches Wischerblatt zum Reinigen von Scheiben an Kraftfahrzeugen mit einem langgestreckten Traggestell, das mit Haltekrallen eine Kopfleiste einer langgestreckten, aus einem elastischen Material bestehenden Wischleiste umgreift, mit einem in der Kopfleiste vorhandenen, rundum geschlossenen, an den Endflächen der Wischleiste mündenden Längskanal, in dem eine Federschiene angeordnet und mit Haltemitteln gegen Längsverschiebung fixiert ist und an der Wischleiste angebrachte Mittel mit einem Gestellteil zusammenwirkend diese unverlierbar am Traggestell sichern, ist aus DE195 22273 bekannt. Damit das Wischerblatt stabil und verrutschsicher gehalten wird, wird bei dem Wischerblatt nach diesem Stand der Technik die Federschiene formschlüssig in dem Längskanal gehalten und die Sicherungsmittel fest mit der Wischleiste verbunden.

Der Nachteil bei diesem Stand der Technik ist jedoch, daß die Krallenbügel den Wischer sehr kompakt und stabil umgreifen. Das Wischerblatt ist nicht mehr ausreichend beweglich, und bei Umkehrung der Wischrichtung stellt es sich nicht mehr in den erforderlichen 45° in Bezug auf die Scheibenoberfläche ein. Es wäre daher ein Wischerblatt wünschenswert, das flexibler ist. Andererseits muß das Wischerblatt eine ausreichende Steifigkeit aufweisen, damit der erforderliche Wischdruck auf der Scheibe erreicht wird. Daher ist es nicht möglich, das Wischerblatt ausschließlich aus weichem Material herzustellen.

Es ist Aufgabe der vorliegenden Erfindung, die Beweglichkeit des Wischerblattes zu verbessern, ohne daß die mindestens erforderliche Steifigkeit verlorengeht.

Die Aufgabe wird gelöst durch ein Wischerblatt mit den Merkmalen nach Anspruch 1.

Der Erfindung liegt die Idee zugrunde, den Krallenbügel statt über den Gummi wie im Stand der Technik direkt an der Federschiene zu befestigen, wobei zwischen dem Metall des Krallenbügels und dem Metall der Federschiene ein ausreichendes Spiel besteht, so daß sich Krallenbügel und Federschiene leicht gegeneinander bewegen können. Diese Verbindung zwischen Krallenbügel und dem Wischerblatt ist damit unabhängig von der Luftfeuchtigkeit und gewährt daher zuverlässig die erforderliche Flexibilität des Andrückoder Kippwinkels des Wischerblattes in Bezug auf die Scheibenoberfläche.

Das erfindungsgemäße Wischerblatt zum Reinigen von Kraftfahrzeugscheiben, das über mehrere Krallenbügel aus Metall von einem Wischerarm gehalten wird, wobei das Wischerblatt eine Federschiene aus Metall mit einer Ummantelung aus Gummi umfaßt und die Ummantelung in eine Wischlippe übergeht, ist dadurch gekennzeichnet, daß die Ummantelung der Federschiene in Höhe der Krallenbügel entlang der Federschiene unterbrochen ist, so daß die Federschiene freiliegt und direkt von dem Krallenbügel gehalten wird.

Ein Vorteil des erfindungsgemäßen Wischerblattes besteht darin, daß die Befestigung unabhängig von der Luftfeuchtigkeit ist. Das elastische Material der Ummantelung, über das der Krallenbügel beim Stand der Technik das Wischerblatt hält, quillt nämlich insbesondere bei hoher Luftfeuchtigkeit oder bei Regen auf. Dadurch ist eine Bewegung zwischen den Krallenbügeln und der Kopfleiste nicht mehr möglich. Dies wird bei dem erfindungsgemäßen Wischerblatt vermieden.

Zweckmäßigerweise ist die Länge der Unterbrechung der Ummantelung der Federschiene etwa gleich der Breite des Krallenbügels.

Zwischen der Federschiene und dem Krallenbügel kann vorteilhafterweise ein Spiel vorgesehen sein, oder die Federschiene selbst ist im Bereich der Krallenbügel rund ausgebildet. Die Bewegungsmöglichkeit des Wischerblattes um seine Längsachse wird hierdurch verbessert, so daß das Wischerblatt bei der Richtungsumkehr immer sicher in seine Schlepplage schwenkt.

Die Federschiene kann in bevorzugter Weise zwei Enden aufweisen, die die Federschiene umgreifen und die Auslenkung des Wischerblattes beim Schwenken in die Schlepplage in Form eines Anschlages begrenzen.

Weitere Merkmale und Vorteile ergeben sich aus der folgenden Beschreibung eines zeichnerisch dargestellten Ausführungsbeispiels des erfindungsgemäßen Wischers.
- Fig. 1: zeigt die Lage eines Wischerblattes nach dem Stand der Technik auf einer Windschutzscheibe.
- Fig. 2A und 2B: zeigt jeweils einen Querschnitt einer Ausführungsform des erfindungsgemäßen Wischerblattes.
- Fig. 3A und 3B: zeigt jeweils einen Querschnitt einer Ausführungsform des erfindungsgemäßen Wischerblattes mit im Bereich der Krallenbügel kreisförmig ausgebildeter Federschiene

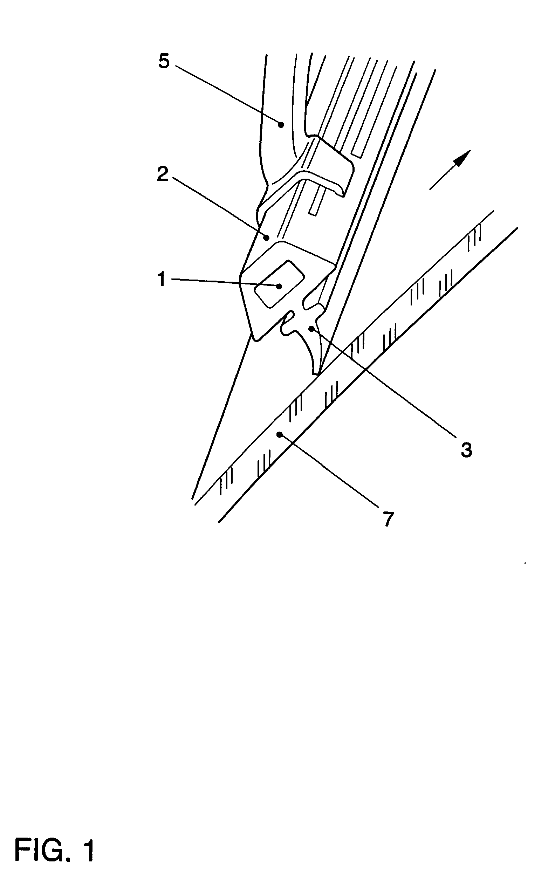

In der Darstellung in Fig. 1 ist ein Wischerblatt zum Reinigen von Kraftfahrzeugscheiben gemäß dem Stand der Technik dargestellt, wie es über eine Windschutzscheibe 7 eines Kraftfahrzeugs bewegt wird. Die Bewegungsrichtung des Wischerblattes ist mit einem fett gezeichneten Pfeil angedeutet. Das Wischerblatt umfaßt als zentrales Element eine Federschiene 1. Die Federschiene 1 wird von einer Ummantelung 2 aus Gummi umgeben. Das Wischerblatt wird von einem Krallenbügel 5 gehalten, der mit einem (nicht dargestellten) Wischerarm verbunden ist. Der Wischerarm wird seinerseits von einem (nicht gezeigten) Wischermotor angetrieben. Der Krallenbügel besteht in der Regel aus Metall. Der Krallenbügel 5 umgreift das Wischerblatt über die Ummantelung 2 der Federschiene 1.

Die Ummantelung 2 geht in eine Wischlippe 3 über. Die Wischlippe 3 endet in einer geraden Fläche, so daß sich zwei Mikrokanten der Wischlippe 3 ergeben. Belastet über die Haltekrallen 5 und gestützt durch die Federschiene 1 berührt die Mikro-Doppelkante der Wischlippe 3 die Scheibe. Zur optimalen Wischleistung wird die Lippe im gesamten Wischfeld wie in Fig. 1 angedeutet über die Scheibe gezogen, so daß die Endfläche der Wischlippe 3 mit der Windschutzscheibe 7 einen Winkel von etwa 45° bildet. Dieser Andrückwinkel der Wischlippe wird beim Stand der Technik allein durch die Wahl des Profils und der technischen Eigenschaften des Gummis gewährleistet. Eine Anpassung des Andrückwinkels auf eine andere Art ist nicht gegeben. Dies hat insbesondere bei trockener Oberfläche der Windschutzscheibe zur Folge, daß der Druck auf der Wischlippe nicht konstant gehalten werden kann: der Wischer "rattert" auf der Windschutzscheibe. Andererseits muß das Wischerblatt eine ausreichende Steifigkeit aufweisen, damit der erforderliche Wischdruck auf der Scheibe erreicht wird. Daher ist es nicht möglich, das Wischerblatt beispielsweise ohne Federschiene nur aus Gummi herzustellen.

Um dem Wischerblatt die höchstmögliche Beweglichkeit zu geben, ohne daß die mindestens erforderliche Steifigkeit verlorengeht, sind bei dem erfindungsgemäßen Wischerblatt bei der Ummantelung 2 der Federschiene 1 in Höhe jedes der mehreren Krallenbügel 5 entlang der Federschiene 1 Unterbrechungen vorgesehen. Die Länge dieser Unterbrechungen ist so gewählt, daß sie einer Breite des Krallenbügels 5 entsprechen. Die Federschiene 1 liegt über die Länge der Unterbrechungen frei, so daß die Federschiene 1 direkt und nicht mehr wie beim Stand der Technik mittelbar über die Ummantelung 2 von dem Krallenbügel 5 gehalten wird.

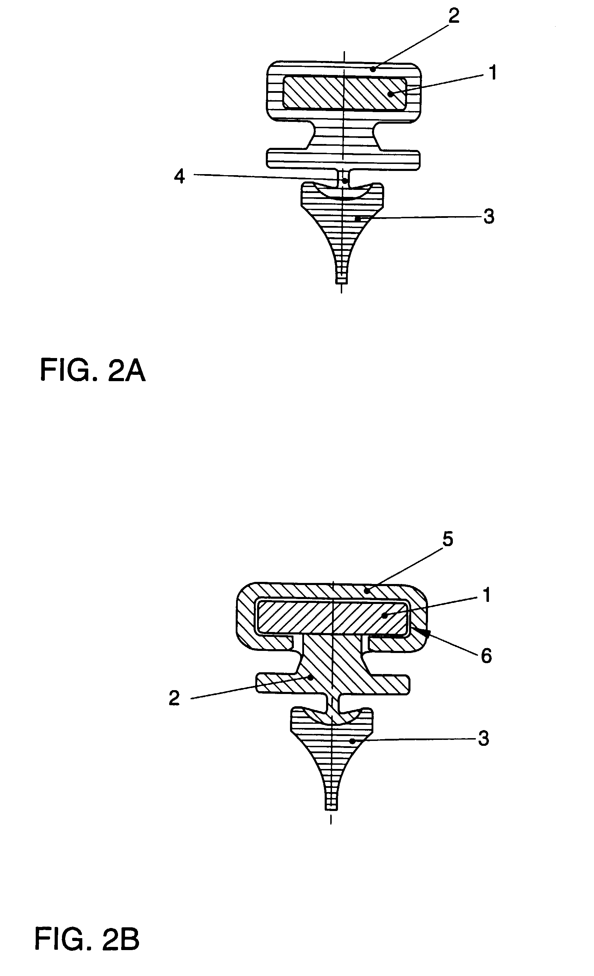

Fig. 2A zeigt einen Abschnitt des erfindungsgemäßen Wischerblattes an einer Stelle im Querschnitt, die sich nicht in Höhe eines Krallenbügels 5 befindet. An dieser Stelle ist die Federleiste 1 wie beim Stand der Technik im ganzen Umfang durch die Ummantelung 2 bedeckt. Die Ummantelung 2 ist über einen Steg 4 mit der Wischlippe 3 verbunden.

Fig. 2B zeigt einen Abschnitt des erfindungsgemäßen Wischerblattes an einer Stelle im Querschnitt, die sich in Höhe eines Krallenbügels 5 befindet. An dieser Stelle ist die Federschiene 1 nicht von der Ummantelung 2 umgeben. Statt dessen umgreift der Krallenbügel 5 direkt die Federschiene 1. Der Krallenbügel 5 umfaßt die Federschiene 1 dabei wenigstens teilweise, so daß auf der Seite der Wischlippe 3 ein Bereich frei bleibt. Die Ummantelung bzw. der Wischergummi 2 ist in diesem Bereich über die ganze Länge des Wischerblattes durchgängig. Dadurch ergibt sich eine größtmögliche Steifigkeit des Wischergummis relativ zur Federschiene 1 trotz der Unterbrechung der Ummantelung 2 der Federschiene 1 in Höhe des Krallenbügels 5. Sowohl Krallenbügel 5 als auch Federschiene 1 bestehen aus Metall. Damit ist der Reibungskoeffizient von Krallenbügel 5 und Federschiene nicht so hoch wie bei einer Verbindung zwischen Metall und Gummi.

Um weiteren Spielraum für kleine Bewegungen zwischen Krallenbügel und Federschiene zu schaffen, wird ein kleiner Abstand 6 zwischen Krallenbügel 5 und Federschiene 1 vorgesehen. Dadurch ergibt sich ein Spiel für eine Relativbewegung, und das Wischerblatt kann sich gegenüber dem Krallenbügel 5 wenigstens in einem engen Rahmen bewegen und eine Kippbewegung machen.

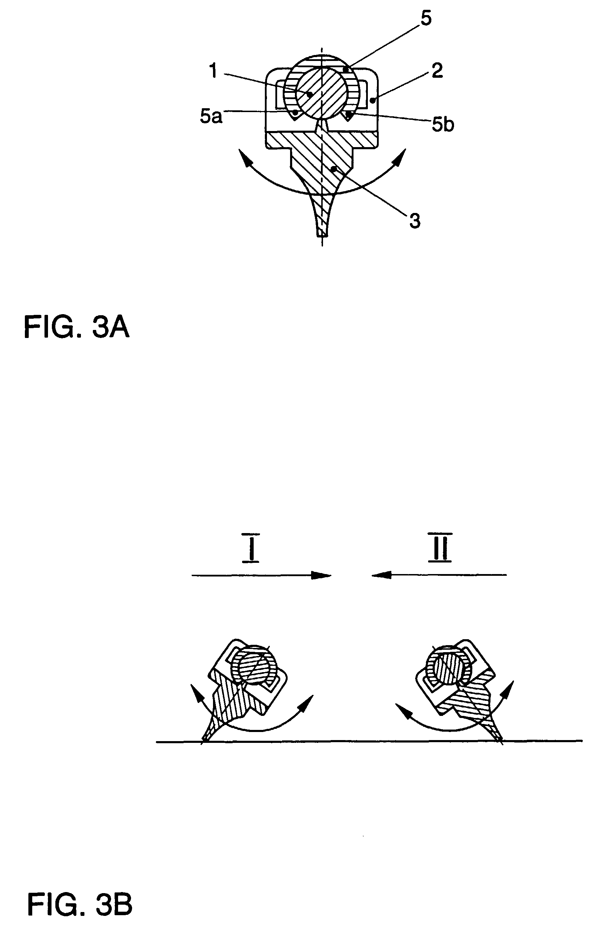

In Fig.3A und 3B ist ein Wischerblatt mit einem im Bereich des Krallenbügels 5 kreisförmigen Federschiene 1 zu erkennen. Das Wischerblatt ist dadurch in dem Krallenbügel 5 schwenkbar gelagert. Die Federschiene 5 hat zwei Enden 5a und 5b durch die die Auslenkung des Wischerblattes wie in Fig. 3b zu erkennen ist begrenzt ist.

Mit dem erfindungsgemäßen Wischerblatt wird so eine flexiblere Halterung an dem Krallenbügel und damit an dem Wischerarm erreicht, so daß sich das Wischerblatt einfacher in den gewünschten Winkel gegenüber der Windschutzscheibe einstellen kann und ein "Rattern" bei der Bewegung des Wischers über die Windschutzscheibe zuverlässig und unabhängig von der Luftfeuchtigkeit vermieden wird. Trotz der Beweglichkeit des Wischerblattes um seine Längsachse ist durch die Federschiene die gewünschte Steifigkeit des Wischerblattes erreicht.

### BEZUGSZEICHENLISTE

- 1: Federschiene
- 2: Ummantelung, Wischergummi
- 3: Wischlippe
- 4: Steg
- 5: Krallenbügel
- 5a;5b: Enden der Krallenbügel
- 6: Abstand zwischen Krallenbügel und Federschiene
- 7: Windschutzscheibe

## Patentansprüche

1. Wischerblatt zum Reinigen von Kraftfahrzeugscheiben, das über mehrere Krallenbügel (5) aus Metall von einem Wischerarm gehalten wird, wobei das Wischerblatt eine Federschiene (1) aus Metall mit einer Ummantelung (2) aus Gummi umfaßt und die Ummantelung (2) in eine Wischlippe (3) übergeht,
**dadurch gekennzeichnet**, daß
die Ummantelung (2) der Federschiene (1) in Höhe der Krallenbügel (5) entlang der Federschiene (1) über eine Länge unterbrochen ist, so daß die Federschiene (1) freiliegt und direkt von dem Krallenbügel (5) gehalten wird.

2. Wischerblatt nach Anspruch 1, **dadurch gekennzeichnet**, daß die unterbrochene Länge der Ummantelung (2) der Breite des Krallenbügels (5) entspricht.

3. Wischerblatt nach einem der Ansprüche 1 bis 2, **dadurch gekennzeichnet**, daß die Federschiene (1) im Bereich der Krallenbügel (5) einen runden Querschnitt aufweist.

4. Wischerblatt nach einem der Ansprüche 1 bis 3, **dadurch gekennzeichnet**, daß die Krallenbügel (5) zwei Enden (5a;5b) aufweisen, die Enden (5a;5b) die Federschiene (1) umgreifen und als die Auslenkung des Wischerblattes begrenzende Anschläge ausgebildet sind.
